(19) **Europäisches Patentamt**
**European Patent Office**
**Office européen des brevets**

(11) **EP 4 589 149 A1**

(12) **EUROPEAN PATENT APPLICATION**

(43) Date of publication:
**23.07.2025 Bulletin 2025/30**

(21) Application number: **24197889.9**

(22) Date of filing: **02.09.2024**

(51) International Patent Classification (IPC):
*F04C 25/02* (2006.01)   *F04B 37/14* (2006.01)
*F04B 49/06* (2006.01)   *F04C 28/06* (2006.01)
*F04D 27/00* (2006.01)

(52) Cooperative Patent Classification (CPC):
**F04C 25/02; F04B 37/14; F04B 49/065;**
**F04B 49/22; F04C 28/06; F04D 27/008;**
F04B 2205/01; F04C 2270/18; F04C 2270/19

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.01.2024 CN 202410077859**

(71) Applicant: **Jiangsu Jingchuang Electronics Co., Ltd**
**Xuzhou, Jiangsu 221116 (CN)**

(72) Inventors:
• **JI, Jiaxiang**
  **Xuzhou, 221116 (CN)**
• **ZHENG, Hongling**
  **Xuzhou, 221116 (CN)**
• **ZHANG, Lingchi**
  **Xuzhou, 221116 (CN)**

(74) Representative: **Gille Hrabal**
**Partnerschaftsgesellschaft mbB**
**Patentanwälte**
**Brucknerstraße 20**
**40593 Düsseldorf (DE)**

(54) **A METHOD AND SYSTEM FOR AUTOMATIC CONTROL OF A VACUUM PUMP**

(57)    The present disclosure relates to a method and system for automatic control of a vacuum pump.. The method involves: starting the vacuum pump and obtaining system parameters; starting the motor and opening the solenoid valve; collecting the current vacuum value and motor start time; establishing a vacuum value model; comparing the current and predicted vacuum values; establishing a time parameter model; comparing the current vacuum value and time with set values; and turning off the motor and solenoid valve. This system enables remote and automatic control through solenoid valves and control circuits, saving energy, reducing labor costs, and improving efficiency..

FIG. 1

EP 4 589 149 A1

**Description**

**TECHNICAL FIELD**

The disclosure relates to the field of vacuum pump control technology, in particular to a method and system for automatic control of a vacuum pump.

**BACKGROUND**

Vacuum pumps use various methods to create and maintain a vacuum. They are widely used in industries such as electronics, metallurgy, chemical engineering, food, machinery, medicine, and aerospace. During the operation of a vacuum pump, to prevent oil backflow, vacuum valves need to be installed at the inlet of the vacuum pump. Vacuum valves are components in vacuum systems used to change airflow direction, adjust airflow volume, and cut off or connect pipelines. The closing parts of vacuum valves are sealed with rubber sealing rings or metal sealing rings.

Traditional mechanical valves rely on manual control of valve core actions to achieve opening and closing functions. During vacuum pump operation, refrigeration engineers need to monitor and operate the entire process manually. This results in enormous labor and time costs.

Therefore, there is a need to provide a method and system for automatic control of a vacuum pump. This method and system use solenoid valves and control circuits for remote and automatic control. It saves energy and electricity, reduces labor costs, and improves work efficiency.

**SUMMARY**

To overcome the deficiencies of existing technology, the present disclosure provides a method and system for automatic control of a vacuum pump.

The technical solution of the present disclosure is as follows:A method for automatic control of a vacuum pump, comprising:

S1: Starting the vacuum pump and obtaining system parameters of the vacuum pump;

S2: Starting the motor and opening the solenoid valve;

S3: Collecting the current vacuum value $D_1$ of the vacuum pump and the start time $t_1$ of the motor;

S4: Establishing a vacuum value model:

$$D_X = 10 + \frac{0.85}{(t_x - t_1) \times \left( \frac{J_0 \times (t_x + J_2)}{t_x + J_1} \right)}$$

Where Dx is the predicted vacuum value, $t_x$ is the current time, $J_0, J_1, J_2$ are constant parameters of the vacuum value model, with initial values of $J_0 = 1$, $J_1 = 3000$, $J_2 = 4$;

S5: Determining the relationship between the current vacuum value $D_1$ of the vacuum pump and the predicted vacuum value Dx, if $D_X \neq D_1$, then modifying $J_0, J_1, J_2$, and returning to step S4; if $D_X = D_1$, then proceeding to the next step;

S6: Establishing a time parameter model:

$$F_{(X)} = t_2^2 + t_2(J_2 - t_1 - A) - (t_1 \times J_2 - AJ_1)$$

$$A = \frac{0.85}{(D-10) \times J_0}$$

Where A is a constant, , D is the preset vacuum value, $t_2$ is the predicted time;

Calculating $t_2$;

S7: Determining the relationship between the preset vacuum value D and the current vacuum value $D_1$ at the current moment, if $D_1 > D$, then entering the next moment and repeating this step, if $D_1 = D$, then proceeding to the next step, if $D_1 < D$, then proceeding to step S9;

S8: Determining the relationship between the current time $t_x$ and the predicted time $t_2$, if $t_x < t_2$, then entering the next moment and repeating this step, if $t_x = t_2$, then closing the solenoid valve, entering the next moment and repeating this step, if $t_x > t_2$, then proceeding to the next step;

S9: Turning off the motor and closing the solenoid valve.

As a further improvement of the present disclosure, in step S5, if $D_X > D_1$, then decreasing $J_0$, $J_1$, increasing $J_2$, and returning to step S4; if $D_X < D_1$, then increasing $J_0$, $J_1$, decreasing $J_2$, and returning to step S4.

As a further improvement of the present disclosure, the constant parameters $J_0$, $J_1$, $J_2$ of the vacuum value model are adjusted arithmetically, the arithmetic difference of $J_0$ is $\Delta J_0$, the arithmetic difference of $J_1$ is $\Delta J_1$, and the arithmetic difference of $J_2$ is $\Delta J_2$.

As a further improvement of the present disclosure, steps SB and SC are provided simultaneously with steps S3 - S8;

Step SB: Obtaining the motor temperature $T_1$ and oil temperature $T_2$ of the vacuum pump;

Step SC: Determining the relationship between the motor temperature $T_1$ and the set protection temperature $T_0$, and the relationship between the oil temperature $T_2$ and the set protection temperature $T_0$, if $T_0 - T_1 \geq 10$ and $T_0 - T_2 \geq 10$, then returning to step SB, if not, then alarming and returning to step SB.

As a further improvement of the present disclosure, in step SC, if $T_0 - T_1 < 0$ or $T_0 - T_2 < 0$, then proceeding to step S9.

As a further improvement of the present disclosure, step SD is provided simultaneously with steps S7 - S8;
Step SD: Determining the relationship between the current vacuum value $D_1$ and the predicted vacuum value Dx, if $D_1 >$ Dx, then alarming, entering the next moment and repeating this step, if $D_1 =$ Dx, then entering the next moment and repeating this step, if $D_1 <$ Dx, then decreasing the predicted time $t_2$, entering the next moment and repeating this step.

As a further improvement of the present disclosure, step SE is provided after step S9;
Step S9: Determining whether the current vacuum value $D_1$ is greater than the preset vacuum value D, if not, then entering the next moment and repeating this step; if yes, then opening the solenoid valve and turning on the motor, and returning to step S7.

A control system based on the method for automatic control of a vacuum pump according to above, comprising a vacuum pump assembly, a control circuit and a display control screen, wherein the vacuum pump assembly includes a vacuum pump, a motor, a solenoid valve and a vacuum sensor, the motor is connected to the control circuit;

One end of the solenoid valve is connected to the vacuum pump, and the other end is connected to the control circuit;
One end of the vacuum sensor is connected to the inlet of the vacuum pump, and the other end is connected to the control circuit;
The display control screen is connected to the control circuit.

As a further improvement of the present disclosure, the vacuum pump assembly further includes a first temperature sensor and a second temperature sensor, both the first temperature sensor and the second temperature sensor are connected to the control circuit, the first temperature sensor is used to detect the motor temperature $T_1$ of the vacuum pump, and the second temperature sensor is used to detect the oil temperature $T_2$ of the vacuum pump.

As a further improvement of the present disclosure, the control circuit includes a main control circuit, a power supply circuit for power supply, a clock circuit, a sensor signal processing circuit connected to the vacuum sensor, a solenoid valve control circuit connected to the solenoid valve, a display control circuit connected to the display control screen, a motor drive circuit connected to the motor, a temperature acquisition circuit connected to the first temperature sensor and the second temperature sensor, and a Bluetooth circuit for remote data transmission, all circuits are connected to the main control circuit.

The present disclosure has the following beneficial effects. The present disclosure provides a method and system for automatic control of a vacuum pump. It realizes remote and automatic control of the vacuum pump through solenoid valves and control circuits, achieving separate and linked control of the motor and solenoid valve. By controlling the opening and closing of the solenoid valve, it maintains the vacuum level. Coupled with vacuum sensor and control circuits, it automatically closes the solenoid valve and vacuum pump after work completion, saving energy and electricity, reducing labor costs, and improving work efficiency. With temperature sensors to detect working temperature, it can monitor the safety status of the vacuum pump in real-time, improving overall operational safety.

**BRIEF DESCRIPTION OF THE DRAWINGS**

Figure 1 is a flow chart of the vacuum pump automatic control of the present disclosure;
Figure 2 is a flow chart of the vacuum pump temperature determination of the present disclosure;
Figure 3 is a flow chart of the leak tightness determination of the present disclosure;
Figure 4 is a flow chart of the automatic start of the vacuum pump of the present disclosure;

Figure 5 is a structural diagram of the control circuit of the present disclosure.

**DETAILED DESCRIPTION**

The following description, in conjunction with the accompanying drawings, will clearly and completely describe the technical solutions of the present disclosure. Obviously, the described embodiments are only a part of the embodiments of the present disclosure, not all of them. Based on the embodiments of the present disclosure, all other embodiments obtained by those skilled in the art without creative effort fall within the scope of protection of the present disclosure.

In the description of the present disclosure, it should be noted that terms such as 'center,' 'up,' 'down,' 'left,' 'right,' 'vertical,' 'horizontal,' 'inner,' and 'outer' indicate orientations or positional relationships. These terms are based on those shown in the drawings. These terms are used only for convenience and simplification. They do not indicate or imply that the device or element must have a specific orientation, be constructed in a specific orientation, or operate in a specific orientation. Therefore, they should not be understood as limitations on the present disclosure. Additionally, terms "first", "second", "third" are used only for descriptive purposes and should not be understood as indicating or implying relative importance.

In the description of the present disclosure, it should be noted that, unless otherwise explicitly specified and limited, terms "installed", "connected", "coupled" should be understood broadly. For example, it can be a fixed connection, a detachable connection, or an integral connection; it can be a mechanical connection or an electrical connection; it can be a direct connection or an indirect connection through an intermediate medium. Those skilled in the art can understand the specific meanings of these terms in the present disclosure based on specific situations. Moreover, the technical features involved in different embodiments of the present disclosure described below can be combined with each other as long as they do not conflict.

The present disclosure provides a method and system for automatic control of a vacuum pump. It can realize remote and automatic control of the vacuum pump through solenoid valves and control circuits. This achieves separate and linked control of the motor and solenoid valve. By controlling the opening and closing of the solenoid valve, it maintains the vacuum level. Coupled with vacuum sensor and control circuits, it automatically closes the solenoid valve and vacuum pump after work completion, saving energy and electricity, reducing labor costs, and improving work efficiency.

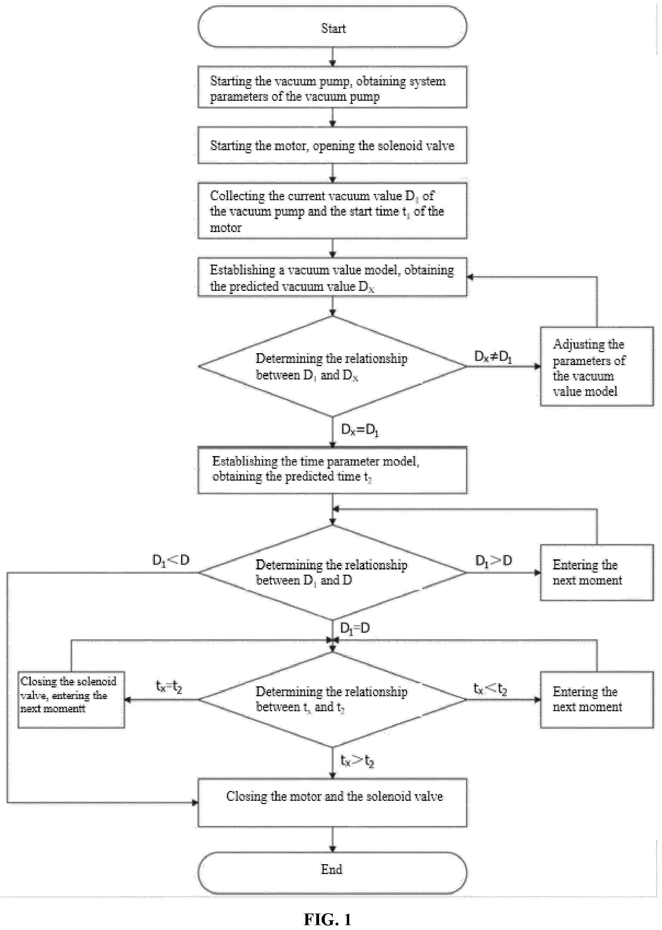

Referring to Figure 1, the method for automatic control of a vacuum pump includes:

S1: Starting the vacuum pump and obtaining system parameters of the vacuum pump; system parameters include the preset vacuum value D.
S2: Starting the motor and opening the solenoid valve.
S3: Collecting the current vacuum value $D_1$ of the vacuum pump and the start time $t_1$ of the motor.
S4: Establishing a vacuum value model:

$$D_X = 10 + \cfrac{0.85}{(t_x - t_1) \times \ (\cfrac{J_0 \times \ (t_x + J_2)}{t_x + J_1})}$$

Where Dx is the predicted vacuum value, $t_x$ is the current time, $J_0, J_1, J_2$ are constant parameters of the vacuum value model, with initial values of $J_0 = 1$, $J_1 = 3000$, $J_2 = 4$.
S5: Determining the relationship between the current vacuum value $D_1$ of the vacuum pump and the predicted vacuum value Dx, if $D_X \neq D_1$, then modifying $J_0, J_1, J_2$, and returning to step S4; if $D_X = D_1$, then proceeding to the next step.

Preferably, if $D_X > D_1$, then decreasing $J_0, J_1$, increasing $J_2$; if $D_X < D_1$, then increasing $J_0, J_1$, decreasing $J_2$. There are two ways to adjust the constant parameters $J_0, J_1, J_2$ of the vacuum value model:

Method 1: Based on experimental experience, the system reasonably adjusts the constant parameters $J_0, J_1, J_2$ of the vacuum value model, i.e., the adjustment values of $J_0, J_1, J_2$ are not equal each time.
Method 2: The constant parameters $J_0, J_1, J_2$ of the vacuum value model are adjusted arithmetically, i.e., for each adjustment of $J_0, J_1$, and $J_2$, the difference between the values before and after the adjustment is equal. the arithmetic difference of $J_0$ is $\Delta J_0$, the arithmetic difference of $J_1$ is $\Delta J_1$, and the arithmetic difference of $J_2$ is $\Delta J_2$.

S6: Establishing a time parameter model:

$$F_{(X)} = t_2^2 + t_2(J_2 - t_1 - A) - (t_1 \times J_2 - AJ_1)$$

$$A = \frac{0.85}{(D-10) \times J_0}$$

where A is a constant, , D is the preset vacuum value, $t_2$ is the predicted time.

Let: a = 1, b = $J_2$ - $t_1$ - A, c = $t_1 \times J_2$ - $AJ_1$, then:

$$F_{(X)} = at_2^2 + bt_2 - c$$

Therefore:

$$t_2 = \frac{-b \pm \sqrt{b^2 + 4ac}}{2a}$$

Calculate $t_2$;

S7: Determining the relationship between the current vacuum value $D_1$ at the current moment and the preset vacuum value D, if $D_1 > D$, then entering the next moment and repeating this step, if $D_1 = D$, then proceeding to the next step, if $D_1 < D$, then proceeding to step S9.
S8: Determining the relationship between the current time $t_x$ and the predicted time $t_2$, if $t_x < t_2$, then entering the next moment and repeating this step, if $t_x = t_2$, then closing the solenoid valve, entering the next moment and repeating this step, if $t_x > t_2$, then proceeding to the next step.
S9: Turning off the motor and closing the solenoid valve.

As an embodiment of the present disclosure, real-time monitoring of the temperature and leak tightness of the vacuum pump are added during the operation of the vacuum pump. When temperature or leak tightness abnormalities occur, the solenoid valve or motor is promptly shut off to avoid damage to the vacuum pump and effectively improve the operational safety of the vacuum pump. The method for automatic control of a vacuum pump includes:

S1: Starting the vacuum pump and obtaining system parameters of the vacuum pump; system parameters include the preset vacuum value D and the set protection temperature $T_0$.
S2: Starting the motor and opening the solenoid valve.

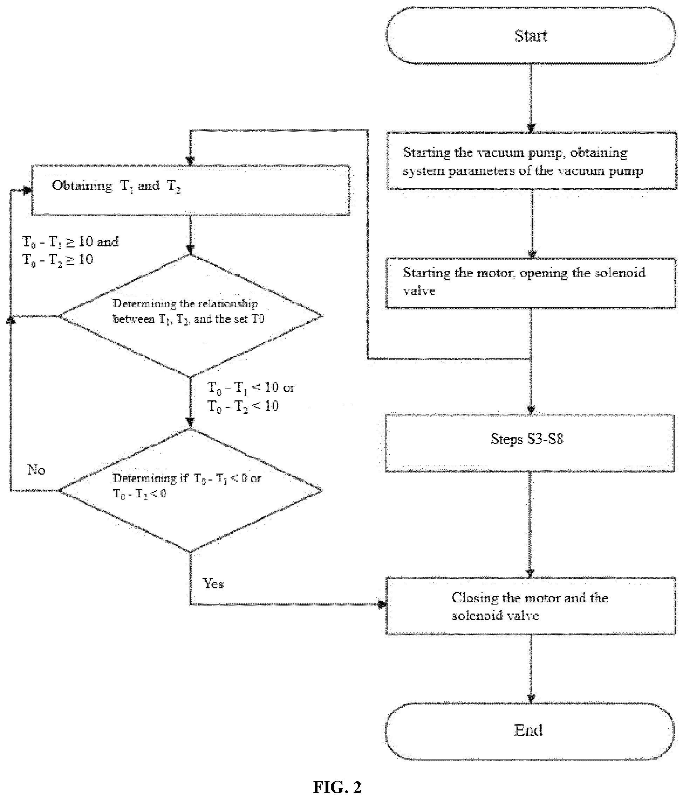

Referring to Figure 2, steps SB and SC are provided simultaneously with steps S3 - S8 to detect and judge the temperature of the vacuum pump;
Step SB: Obtaining the motor temperature $T_1$ and oil temperature $T_2$ of the vacuum pump.
Step SC: Determining the relationship between the motor temperature $T_1$ and the set protection temperature $T_0$, and the relationship between the oil temperature $T_2$ and the set protection temperature $T_0$, if $T_0$ - $T_1 \geq 10$ and $T_0$ - $T_2 \geq 10$, then returning to step SB, if not, then alarming and returning to step SB.
Preferably, when $T_0$ - $T_1 < 10$ or $T_0$ - $T_2 < 10$, determine if $T_0$ - $T_1 < 0$ or $T_0$ - $T_2 < 0$, if yes, then proceed to step S9, if no, then alarm and return to step SB.
S3: Collecting the current vacuum value $D_1$ of the vacuum pump and the start time $t_1$ of the motor.
S4: Establishing a vacuum value model:

$$D_X = 10 + \frac{0.85}{(t_x - t_1) \times \left( \frac{J_0 \times (t_x + J_2)}{t_x + J_1} \right)}$$

S5: Determining the relationship between the current vacuum value $D_1$ of the vacuum pump and the predicted vacuum value Dx, if $D_X \neq D_1$, then modifying $J_0$, $J_1$, $J_2$, and returning to step S4; if $D_X = D_1$, then proceeding to the next step.
S6: Establishing a time parameter model:

$$F_{(X)} = t_2^2 + t_2(J_2 - t_1 - A) - (t_1 \times J_2 - AJ_1)$$

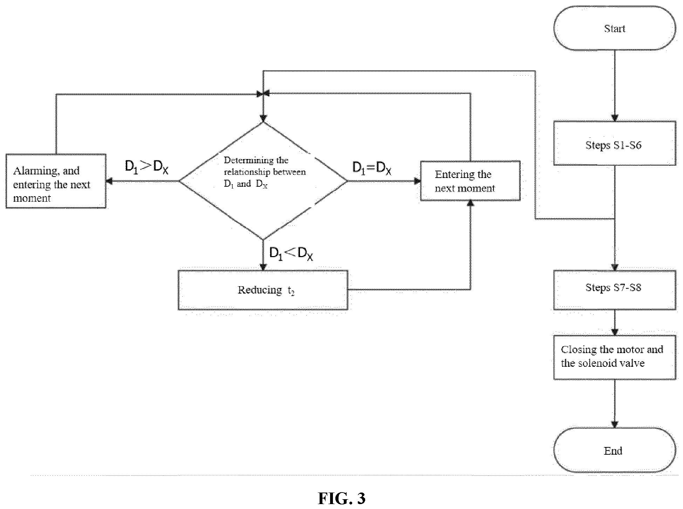

Referring to Figure 3, step SD is provided simultaneously with steps S7 - S8 to judge the leak tightness of the vacuum pump.

Step SD: Determining the relationship between the current vacuum value $D_1$ and the predicted vacuum value Dx. If $D_1 > Dx$, then alarming, entering the next moment and repeating this step. If $D_1 = Dx$, then entering the next moment and repeating this step. If $D_1 < Dx$, then decreasing the predicted time $t_2$, entering the next moment and repeating this step. Through step SD, the motor operating time can be effectively reduced, allowing for the motor and solenoid valve to be shut off earlier.

S7: Determining the relationship between the current vacuum value $D_1$ at the current moment and the preset vacuum value D, if $D_1 > D$, then entering the next moment and repeating this step, if $D_1 = D$, then proceeding to the next step, if $D_1 < D$, then proceeding to step S9.

S8: Determining the relationship between the current time $t_x$ and the predicted time $t_2$, if $t_x < t_2$, then entering the next moment and repeating this step, if $t_x = t_2$, then closing the solenoid valve, entering the next moment and repeating this step, if $t_x > t_2$, then proceeding to the next step.

S9: Turning off the motor and closing the solenoid valve.

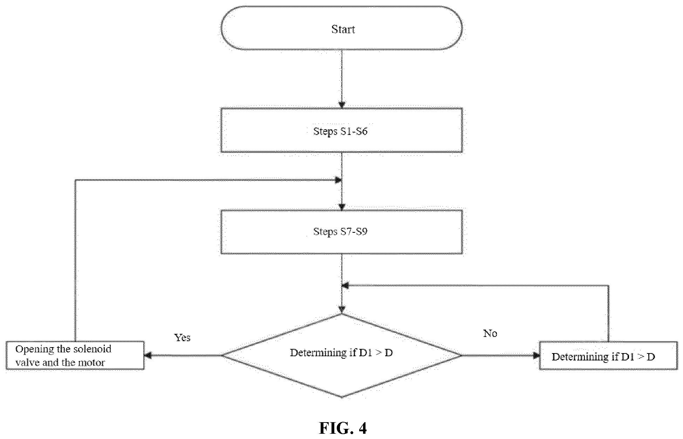

Referring to Figure 4, as an embodiment of the present disclosure, after step S9, i.e., after turning off the motor and closing the solenoid valve, the system performs a vacuum maintenance task. Since the vacuum system cannot achieve 100% sealing, once vacuum pumping stops, the vacuum value will rise at a certain rate over time. Therefore, the system continues to determine the relationship between the current vacuum value $D_1$ at the current moment and the preset vacuum value D. Step SE is provided after step S9.

Step SE: Determining whether the current vacuum value $D_1$ is greater than the preset vacuum value D, if not, then entering the next moment and repeating this step; if yes, then opening the solenoid valve and turning on the motor, and returning to step S7. Through step SE, the system can automatically switch between the vacuum pumping task and the vacuum maintenance task, keeping the system's vacuum value within the set desired range.

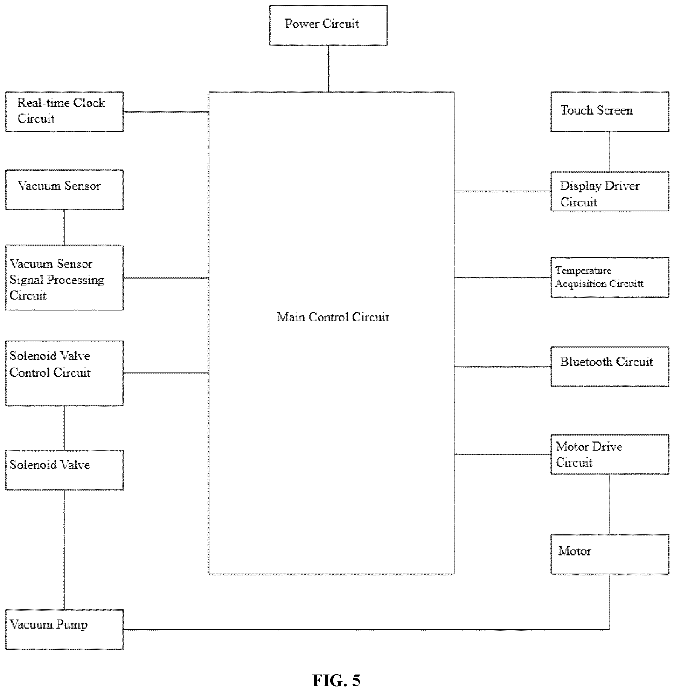

Referring to Figure 5, the present disclosure provides a control system, comprising a vacuum pump assembly, a control circuit and a display control screen. The vacuum pump assembly includes a vacuum pump, a motor, a solenoid valve and a vacuum sensor. The motor is connected to the control circuit; one end of the solenoid valve is connected to the vacuum pump, and the other end is connected to the control circuit. The solenoid valve uses electromagnetic principles to achieve vacuum processing of the pipeline and electromagnetic control. Moreover, using a vacuum solenoid valve can effectively avoid the influence of other irrelevant factors on the pipeline, thus making correct adjustments to the working state of the system.

One end of the vacuum sensor is connected to the inlet of the vacuum pump, and the other end is connected to the control circuit. Detects the content of gas molecules in the air, when there are more gas molecules, the thermal conductivity of the gas is high, and the vacuum value is large; when there are few molecules, the thermal conductivity of the gas is low, and the vacuum value is low.

The control circuit places a thermistor and a heating resistor simultaneously within the vacuum pipeline. Based on the principle of gas molecular thermal conductivity, the control circuit calculates the number of gas molecules in the pipeline by controlling the power of the heating resistor and receiving the thermal power from the thermistor. It can also simultaneously derive the vacuum value data.

The display control screen is connected to the control circuit. Preferably, the display control screen is a capacitive touch screen, utilizing the human body current sensing phenomenon. A capacitor is formed between the finger and the screen, and a tiny current is absorbed when the finger touches, causing current to flow on the four electrodes on the touch panel. The display control circuit calculates the coordinates of the touch point by calculating the ratio of these four currents.

Preferably, the vacuum pump is a rotary vane vacuum pump. Two lines are led out from the pump body of the rotary vane vacuum pump and connected to the control circuit. A rotor is eccentrically installed inside the cavity of the vane pump, with the outer circle of the rotor tangent to the inner surface of the pump cavity (there is a small gap between them). Two spring-loaded vanes are installed in the rotor slot, dividing the stator into two working chambers (high-level working chamber and low-level working chamber). When rotating, the 2XZ type rotary vane vacuum pump uses centrifugal force and spring tension to keep the top of the vane in contact with the inner wall of the pump cavity. The rotation of the rotor drives the vanes to slide along the inner wall of the pump cavity, causing the volume of the high-level working chamber to periodically expand and inhale, while the volume of the low-level working chamber periodically decreases and compresses the gas. With the help of gas and oil pressure, the exhaust valve is pushed open to exhaust, thus obtaining a vacuum.

As an embodiment of the present disclosure, the vacuum pump assembly also includes a first temperature sensor and a second temperature sensor. Both the first temperature sensor and the second temperature sensor are connected to the control circuit. The first temperature sensor is used to detect the motor temperature $T_1$ of the vacuum

pump, and the second temperature sensor is used to detect the oil temperature $T_2$ of the vacuum pump. By comparing and analyzing the motor temperature $T_1$ and oil temperature $T_2$ of the vacuum pump with the set protection temperature $T_0$ respectively, it can avoid unnecessary damage to the vacuum pump due to excessive temperature, and also effectively improve the operational safety of the vacuum pump.

As an embodiment of the present disclosure, the control circuit includes a main control circuit, a power supply circuit for power supply, a clock circuit, a sensor signal processing circuit connected to the vacuum sensor, a solenoid valve control circuit connected to the solenoid valve, a display control circuit connected to the display control screen, a motor drive circuit connected to the motor, a temperature acquisition circuit connected to the first temperature sensor and the second temperature sensor, and a Bluetooth circuit for remote data transmission. All circuits are connected to the main control circuit, realizing real - time monitoring and automatic control of the vacuum pump.

In conclusion, the present disclosure provides a method and system for automatic control of a vacuum pump, which can realize remote control and automatic control of the vacuum pump through solenoid valves and control circuits, achieving separate and linked control of the motor and solenoid valve. By controlling the opening and closing of the solenoid valve, it maintains the vacuum level. Coupled with vacuum sensor and control circuits, it automatically closes the solenoid valve and vacuum pump after work completion, saving energy and electricity, reducing labor costs, and improving work efficiency. Through real - time detection and judgment of the temperature and leak tightness of the vacuum pump, it promptly shuts off the solenoid valve or motor when temperature or leak tightness abnormalities occur, avoiding damage to the vacuum pump and effectively improving its operational safety. After the system closes the solenoid valve and motor, it continues to monitor the system vacuum value, thereby realizing automatic startup of the vacuum pump. The system executes the vacuum pumping task again, achieving automatic switching between vacuum pumping tasks and vacuum maintenance tasks, maintaining the system's vacuum value within the set desired range.

It needs to be emphasized that: the above is only a preferred embodiment of the present disclosure and does not impose any form of limitation on the present disclosure. Any simple modifications, equivalent changes and modifications made to the above embodiments based on the technical essence of the present disclosure are still within the scope of the technical solution of the present disclosure.

The method of claim 1 for automatic control of a vacuum pump can be conducted by a main control circuit or by a control circuit, preferably by a at least one control circuit each being connected to a main control circuit.

At least one step of the steps S 1 to S9 of claim 1 can be conducted by a main control circuit or by a control circuit, preferably by a at least one control circuit each being connected to a main control circuit.

All steps of claim 1 and/or all steps of all claims 1 to 7 can be conducted by a main control circuit or by a control circuit, preferably by a at least one control circuit each being connected to a main control circuit.

The method of claim 1 can be a computer-implemented method.

The control system based on the method for automatic control of a vacuum pump according to claim 1, comprising a vacuum pump assembly, a control circuit and a display control screen, can be arranged such that the control circuit is configured to conduct the method of claim 1, to conduct at least of the steps of the method, and/or to conduct all steps of the method of claim 1, preferably also all steps of the method claims 2 to 7.

**Claims**

1. A method for automatic control of a vacuum pump, comprising:

   S1: Starting the vacuum pump and obtaining system parameters of the vacuum pump;
   S2: Starting the motor and opening the solenoid valve;
   S3: Collecting the current vacuum value $D_1$ of the vacuum pump and the start time $t_1$ of the motor;
   S4: Establishing a vacuum value model:

$$D_X = 10 + \frac{0.85}{(t_x - t_1) \times \left( \dfrac{J_0 \times (t_x + J_2)}{t_x + J_1} \right)}$$

   Where Dx is the predicted vacuum value, $t_x$ is the current time, $J_0, J_1, J_2$ are constant parameters of the vacuum value model, with initial values of $J_0 = 1$, $J_1 = 3000$, $J_2 = 4$;
   S5: Determining the relationship between the current vacuum value $D_1$ of the vacuum pump and the predicted vacuum value Dx, if $D_X \neq D_1$, then modifying $J_0, J_1, J_2$, and returning to step S4; if $D_X = D_1$, then proceeding to the next step;
   S6: Establishing a time parameter model:

$$F_{(X)} = t_2^2 + t_2(J_2 - t_1 - A) - (t_1 \times J_2 - AJ_1)$$

$$A = \frac{0.85}{(D-10) \times J_0}$$

Where A is a constant, $D$ is the preset vacuum value, $t_2$ is the predicted time;

Calculating $t_2$;

S7: Determining the relationship between the preset vacuum value D and the current vacuum value $D_1$ at the current moment, if $D_1 > D$, then entering the next moment and repeating this step, if $D_1 = D$, then proceeding to the next step, if $D_1 < D$, then proceeding to step S9;

S8: Determining the relationship between the current time $t_x$ and the predicted time $t_2$, if $t_x < t_2$, then entering the next moment and repeating this step, if $t_x = t_2$, then closing the solenoid valve, entering the next moment and repeating this step, if $t_x > t_2$, then proceeding to the next step;

S9: Turning off the motor and closing the solenoid valve.

2. The method for automatic control of a vacuum pump according to claim 1, wherein in step S5, if Dx > $D_1$, then decreasing $J_0$, $J_1$, increasing $J_2$, and returning to step S4; if $D_X < D_1$, then increasing $J_0$, $J_1$, decreasing $J_2$, and returning to step S4.

3. The method for automatic control of a vacuum pump according to claim 2, wherein the constant parameters $J_0$, $J_1$, $J_2$ of the vacuum value model are adjusted arithmetically, the arithmetic difference of $J_0$ is $\Delta J_0$, the arithmetic difference of $J_1$ is $\Delta J_1$, and the arithmetic difference of $J_2$ is $\Delta J2$.

4. The method for automatic control of a vacuum pump according to claim 1, wherein steps SB and SC are provided simultaneously with steps S3 - S8;

Step SB: Obtaining the motor temperature $T_1$ and oil temperature $T_2$ of the vacuum pump;

Step SC: Determining the relationship between the motor temperature $T_1$ and the set protection temperature $T_0$, and the relationship between the oil temperature $T_2$ and the set protection temperature $T_0$, if $T_0 - T_1 \geq 10$ and $T_0 - T_2 \geq 10$, then returning to step SB, if not, then alarming and returning to step SB.

5. The method for automatic control of a vacuum pump according to claim 4, wherein in step SC, if $T_0 - T_1 < 0$ or $T_0 - T_2 < 0$, then proceeding to step S9.

6. The method for automatic control of a vacuum pump according to claim 1, wherein step SD is provided simultaneously with steps S7 - S8;

Step SD: Determining the relationship between the current vacuum value $D_1$ and the predicted vacuum value Dx, if $D_1 > Dx$, then alarming, entering the next moment and repeating this step, if $D_1 = Dx$, then entering the next moment and repeating this step, if $D_1 < Dx$, then decreasing the predicted time $t_2$, entering the next moment and repeating this step.

7. The method for automatic control of a vacuum pump according to claim 1, wherein step SE is provided after step S9;

Step S9: Determining whether the current vacuum value $D_1$ is greater than the preset vacuum value D, if not, then entering the next moment and repeating this step; if yes, then opening the solenoid valve and turning on the motor, and returning to step S7.

8. A control system based on the method for automatic control of a vacuum pump according to claim 1, comprising a vacuum pump assembly, a control circuit and a display control screen, wherein the vacuum pump assembly includes a vacuum pump, a motor, a solenoid valve and a vacuum sensor, the motor is connected to the control circuit;

one end of the solenoid valve is connected to the vacuum pump, and the other end is connected to the control circuit;

one end of the vacuum sensor is connected to the inlet of the vacuum pump, and the other end is connected to the control circuit;

the display control screen is connected to the control circuit.

9. The control system according to claim 8, wherein the vacuum pump assembly further includes a first temperature sensor and a second temperature sensor, both the first temperature sensor and the second temperature sensor are connected to the control circuit, the first temperature sensor is used to detect the motor temperature $T_1$ of the vacuum

pump, and the second temperature sensor is used to detect the oil temperature $T_2$ of the vacuum pump.

10. The control system according to claim 9, wherein the control circuit includes a main control circuit, a power supply circuit for power supply, a clock circuit, a sensor signal processing circuit connected to the vacuum sensor, a solenoid valve control circuit connected to the solenoid valve, a display control circuit connected to the display control screen, a motor drive circuit connected to the motor, a temperature acquisition circuit connected to the first temperature sensor and the second temperature sensor, and a Bluetooth circuit for remote data transmission, all circuits are connected to the main control circuit.

**FIG. 1**

**FIG. 2**

FIG. 3

**FIG. 4**

**FIG. 5**

Europäisches
Patentamt
European
Patent Office
Office européen
des brevets

# EUROPEAN SEARCH REPORT

**Application Number**

EP 24 19 7889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/396236 A1 (GRODE AARON C [US] ET AL) 23 December 2021 (2021-12-23) * the whole document * | 1-10 | INV. F04C25/02 F04B37/14 F04B49/06 |
| X | EP 2 009 287 A2 (MITUTOYO CORP [JP]) 31 December 2008 (2008-12-31) * the whole document * | 1-10 | F04C28/06 F04D27/00 |
| X | US 2015/170938 A1 (SEIGEOT BERTRAND [FR]) 18 June 2015 (2015-06-18) * the whole document * | 1-10 | |
| X | CN 109 253 900 A (INST ELECTRIC POWER SCIENCES STATE GRID CHONGQING ELECTRIC POWER CO ET) 22 January 2019 (2019-01-22) * the whole document * | 1-10 | |

**TECHNICAL FIELDS SEARCHED (IPC)**

F04C
F04B
F04D

The present search report has been drawn up for all claims

| Place of search | Date of completion of the search | Examiner |
|---|---|---|
| Munich | 29 January 2025 | Alquezar Getan, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 7889

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | Publication date | Patent family member(s) | | Publication date |
|---|---|---|---|---|
| US 2021396236 A1 | 23-12-2021 | CN | 219262678 U | 27-06-2023 |
| | | EP | 4168678 A1 | 26-04-2023 |
| | | US | 2021396236 A1 | 23-12-2021 |
| | | WO | 2021257421 A1 | 23-12-2021 |
| EP 2009287 A2 | 31-12-2008 | NONE | | |
| US 2015170938 A1 | 18-06-2015 | CN | 104541061 A | 22-04-2015 |
| | | EP | 2875240 A2 | 27-05-2015 |
| | | FR | 2993614 A1 | 24-01-2014 |
| | | JP | 6242393 B2 | 06-12-2017 |
| | | JP | 2015522754 A | 06-08-2015 |
| | | KR | 20150034229 A | 02-04-2015 |
| | | US | 2015170938 A1 | 18-06-2015 |
| | | WO | 2014012896 A2 | 23-01-2014 |
| CN 109253900 A | 22-01-2019 | NONE | | |

EPO FORM P0459

For more details about this annex : see Official Journal of the European Patent Office, No. 12/82